# EUROPEAN PATENT APPLICATION

(11) **EP 4 570 575 A1**
(43) Date of publication of application: **18.06.2025**
(21) Application number: 24210460.2
(22) Date of filing: 04.11.2024
(51) Int. Cl.: B60L 50/20, B60L 53/12, B60L 53/57, B60L 53/65, B60L 53/66, B60L 53/68, B60L 55/00, B60L 58/12, H02J 3/32, H02J 50/80, B60L 53/62, B60L 53/126

(54) **POWER MANAGEMENT SYSTEM FOR WIRELESS POWER SUPPLY**

(30) Priority: 12.12.2023 TW 112148351
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); HUANG, Kuan-Chieh, 821 Kaohsiung City (TW)
(74) Representative: Becker, Eberhard

(57) **Abstract**

Disclosed is a power management system (100, 200) for a wireless power supply. The power management system (100, 200) includes control devices (110_1, 110_2, 210_1, 210_2), a wireless charging platform (120, 220), and a remote monitoring device (130, 230). The wireless charging platform (120, 220) wirelessly charges at least one of electric auxiliary vehicles (EV1, EV2). The remote monitoring device (130, 230) controls a power supply behavior of the wireless charging platform (120, 220). A first control device (110_1, 210_1) is disposed on a first electric auxiliary vehicle (EV1). The wireless charging platform (120, 220) wirelessly powers the first electric auxiliary vehicle (EV1) in response to a first command (CMD1). The wireless charging platform (120, 220) wirelessly powers other electric auxiliary vehicles (EV2) by using a battery power (PB) of the first electric auxiliary vehicle (EV1) in response to a second command (CMD2).

## Description

### BACKGROUND

### Technical Field

The disclosure relates to a power management system, and in particular to a power management system for a wireless power supply.

### Description of Related Art

An electric auxiliary vehicle (such as an electric auxiliary wheelchair, an electric auxiliary bicycle, an electric auxiliary scooter, or an electric motorcycle) is a mobility vehicle that uses battery power as a power source to assist a user in exerting force. The battery of the electric auxiliary vehicle must be charged. The battery of the current electric auxiliary vehicle may be charged using a charging pile.

However, the current charging mechanism does not monitor and regulate the power supply power of the charging pile and a residual power of the electric auxiliary vehicle. Therefore, the current charging mechanism is not able to provide a power-saving or highly efficient power management.

### SUMMARY

The disclosure provides a power management system that may provide a power-saving and highly efficient wireless power management mechanism.

The power management system of the disclosure includes multiple control devices, a wireless charging platform, and a remote monitoring device. The control devices are respectively disposed on one of multiple electric auxiliary vehicles. The wireless charging platform wirelessly communicates with the control devices. The wireless charging platform wirelessly charges at least one of the electric auxiliary vehicles. The remote monitoring device and the wireless charging platform communicates to receive a residual power of the electric auxiliary vehicles. The remote monitoring device controls a power supply behavior of the wireless charging platform according to the residual power and a platform power supply upper limit. A first control device among the control devices is configured on a first electric auxiliary vehicle among the electric auxiliary vehicles. The wireless charging platform wirelessly powers the first electric auxiliary vehicle in response to a first command from the first control device. The wireless charging platform wirelessly powers at least one of the other electric auxiliary vehicles by using a battery power of the first electric auxiliary vehicle in response to a second command from the first control device.

Based on the above, the power management system may control the power supply behavior of the wireless charging platform according to the residual power and the platform power supply upper limit. In addition, the wireless charging platform may wirelessly power at least one of the other electric auxiliary vehicles by using the battery power of the first electric auxiliary vehicle. In this way, the power management system may provide a power-saving and highly efficient wireless power management mechanism.

### BRIEF DESCRIPTION OF THE DRAWINGS

FIG. 1 is a schematic diagram of a power management system according to an embodiment of the disclosure.
FIG. 2 is a schematic diagram of a power management system according to a second embodiment of the disclosure.

### DETAILED DESCRIPTION OF DISCLOSED EMBODIMENTS

Some embodiments of the disclosure will be described in detail with reference to accompanying drawings. Reference numerals cited in the following descriptions will be regarded as the same or similar elements when the same reference numerals appear in different drawings. The embodiments are only a part of the disclosure and do not disclose all possible embodiments of the disclosure. More specifically, the embodiments are only examples within the claims of the disclosure.

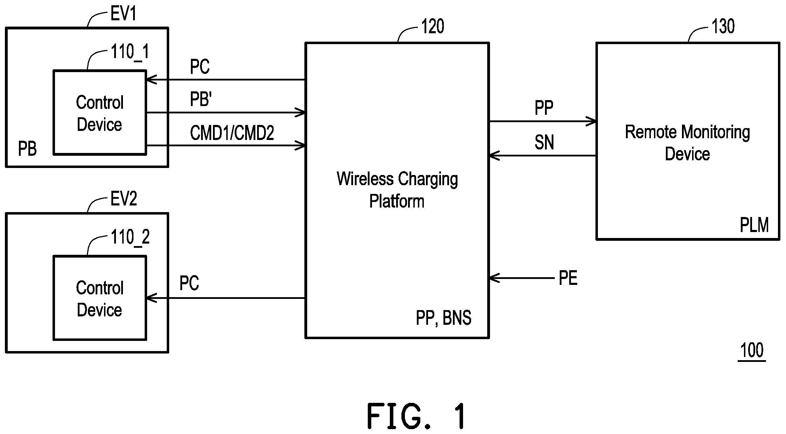

Please refer to FIG. 1. FIG. 1 is a schematic diagram of a power management system according to an embodiment of the disclosure. In the embodiment, a power management system 100 includes a control device 110_1, a control device 110_2, a wireless charging platform 120, and a remote monitoring device 130. The control device 110_1 and the control device 110_2 are respectively disposed on an electric auxiliary vehicle EV1 and an electric auxiliary vehicle EV2. In the embodiment, the control device 110_1 is disposed in the electric auxiliary vehicle EV1. The control device 110_2 is disposed in the electric auxiliary vehicle EV2.

In the embodiment, the wireless charging platform 120 wirelessly communicates with the control device 110_1 and the control device 110_2. The wireless charging platform 120 wirelessly charges at least one of the electric auxiliary vehicle EV1 and the electric auxiliary vehicle EV2 in any manner. In the embodiment, the wireless charging platform 120 may implement different power supply behaviors according to commands from the control device 110_1 and the control device 110_2. Taking the electric auxiliary vehicle EV1 as an example, the control device 110_1 may provide one of a first command CMD1 and a second command CMD2. The wireless charging platform 120 wirelessly power the electric auxiliary vehicle EV1 in response to the first command CMD1 from the control device 110_1. For example, the wireless charging platform 120 may convert an external power PE into a charging power PC, and wirelessly power the electric auxiliary vehicle EV1 by using the charging power PC. The external power PE may come from a power grid or utility power.

In addition, the wireless charging platform 120 wirelessly powers the other electric auxiliary vehicle (that is, the electric auxiliary vehicle EV2) by using a battery power PB of the electric auxiliary vehicle EV1 in response to the second command CMD2.

In the embodiment, the remote monitoring device 130 wirelessly communicates with the wireless charging platform 120 to receive a residual power of the electric auxiliary vehicle EV1 and the electric auxiliary vehicle EV2. The remote monitoring device 130 controls a power supply behavior of the wireless charging platform 120 according to the residual power of the electric auxiliary vehicle EV1 and the electric auxiliary vehicle EV2, and a platform power supply upper limit PLM. For example, the wireless charging platform 120 provides a platform power supply PP to the remote monitoring device 130. The remote monitoring device 130 determines the platform power supply PP. When the platform power supply PP is greater than the platform power supply upper limit PLM, the remote monitoring device 130 uses a notification signal SN to notify the wireless charging platform 120 to reduce load. Therefore, the platform power supply PP may decrease.

It is worth mentioning here that the remote monitoring device 130 may control the power supply behavior of the wireless charging platform 120. In addition, the wireless charging platform 120 may wirelessly power at least one of the other electric auxiliary vehicles by using a battery power of the first electric auxiliary vehicle EV1. A power usage of the external power PE may be reduced. In this way, the power management system 100 may provide a power-saving and highly efficient wireless power management mechanism.

In the embodiment, the wireless charging platform 120 wirelessly powers at least one of the other electric auxiliary vehicles by using the battery power PB of the electric auxiliary vehicle EV1 in response to the second command CMD2. For example, the control device 110_1 may convert the battery power PB of the electric auxiliary vehicle EV1 into a wireless power PB'. The wireless charging platform 120 wirelessly powers at least one of the other electric auxiliary vehicles by receiving the wireless power PB' and using the wireless power PB'.

The wireless charging platform 120 further provides a usage bonus BNS corresponding to the electric auxiliary vehicle EV1 according to the wireless power PB' received by the wireless charging platform 120 itself. For example, the electric auxiliary vehicle EV1 and the electric auxiliary vehicle EV2 may be respectively shared electric auxiliary bicycles, but the disclosure is not limited thereto. During riding, a user of the electric auxiliary vehicle EV1 charges a battery (not shown) of the electric auxiliary vehicle EV1 by using a pedaling force. The battery has sufficient power. Therefore, when the electric auxiliary vehicle EV1 arrives at the wireless charging platform 120, the user of the electric auxiliary vehicle EV1 may operate the control device 110_1 to allow the control device 110_1 to provide the second command CMD2. The wireless charging platform 120 calculates the battery power PB contributed by the electric auxiliary vehicle EV1. The more battery power PB the electric auxiliary vehicle EV1 contributes, the more usage bonus BNS the user of the electric auxiliary vehicle EV1 receives. The usage bonus BNS may be a discount for the user to rent the electric auxiliary vehicle EV1 or a discount for a next rental of an electric auxiliary vehicle. In this way, the power management system 100 provides a novel transaction method.

In the embodiment, in a condition where the platform power supply PP is less than or equal to the platform power supply upper limit PLM, the wireless charging platform 120 may provide the same or different power supply modes for the residual power of the electric auxiliary vehicle EV1 and the electric auxiliary vehicle EV2, such as a normal charging mode or a highpower supercharging mode.

For ease of descriptions, the embodiment uses two control devices (that is, the control devices 110_1 and the control device 110_2) and one wireless charging platform (that is, the wireless charging platform 120) as an example. However, the disclosure is not limited to the number of control devices and the number of wireless charging platforms. In an embodiment, the number of the control devices of the disclosure may be more than two. In another embodiment, the wireless charging platforms of the disclosure may be multiple.

In the embodiment, the wireless charging platform 120 may be a wireless charging station in any form. The remote monitoring device 130 may be any type of electronic device with computing functions such as a server, a desktop computer, a notebook computer, or a smartphone. In the embodiment, the wireless charging platform 120 may communicate with the remote monitoring device 130 by using a wired communication method or a wireless communication method well known to persons skilled in the art.

In the embodiment, the control device 110_2 may also have functions and operations similar to the functions and operations of the control device 110_1, so details are not repeated here.

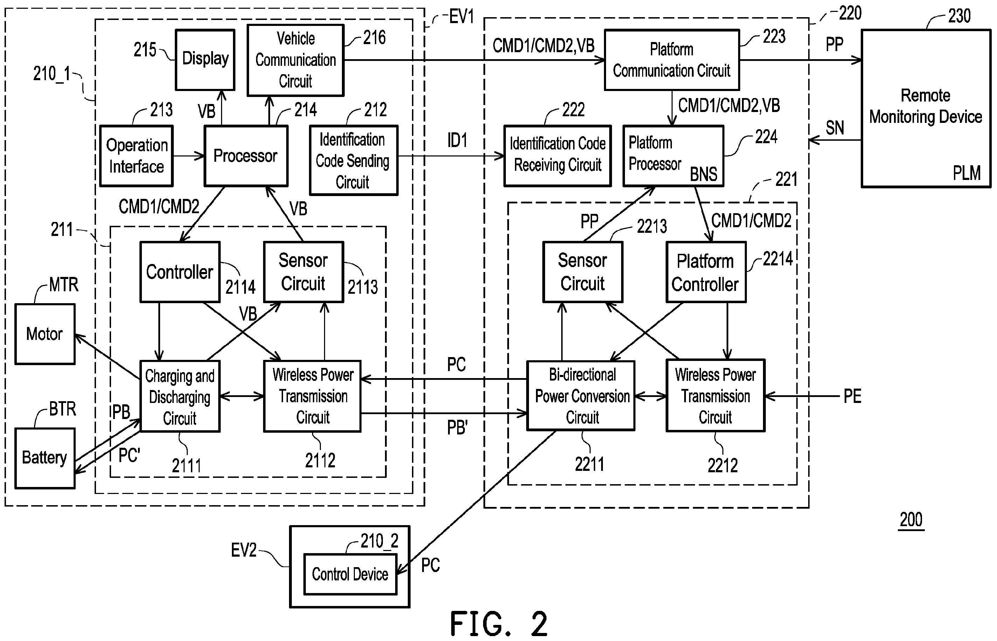

Please refer to FIG. 2. FIG. 2 is a schematic diagram of a power management system according to a second embodiment of the disclosure. In the embodiment, a power management system 200 includes a control device 210_1, a control device 210_2, a wireless charging platform 220, and a remote monitoring device 230. The control device 210_1 and the control device 210_2 are respectively disposed on the electric auxiliary vehicle EV1 and the electric auxiliary vehicle EV2. In the embodiment, the control device 210_1 is disposed in the electric auxiliary vehicle EV1. The control device 210_2 is disposed in the electric auxiliary vehicle EV2.

In the embodiment, the electric auxiliary vehicle EV1 includes a battery BTR and a motor MTR. The control device 210_1 includes a power supply control circuit 211, an identification code sending circuit 212, an operation interface 213, a processor 214, a display 215, and a vehicle communication circuit 216. The power supply control circuit 211 is coupled to the battery BTR and the motor MTR. During riding of the electric auxiliary vehicle EV1, the power supply control circuit 211 uses the battery power PB of the battery BTR to drive the motor MTR. During riding of the electric auxiliary vehicle EV1, the power supply control circuit 211 charges the battery BTR by using the pedaling force.

During a period of wireless communication between the control device 210_1 and the wireless power PC from the wireless charging platform 220 to charge the battery BTR in response to the first command CMD1. During the period of wireless communication between the control device 210_1 and the wireless charging platform 220, the power supply control circuit 211 wirelessly transmits the battery power PB to the wireless charging platform 220 in response to the second command CMD2.

In the embodiment, during the period of wireless communication between the control device 210_1 and the wireless charging platform 220, the identification code sending circuit 212 provides an identification code ID1 of the electric auxiliary vehicle EV1 to the wireless charging platform 220. Therefore, the wireless charging platform 220 may use the identification code ID1 to identify the electric auxiliary vehicle EV1. The operation interface 213 is coupled to the power supply control circuit 211. The operation interface 213 is operated to provide one of the first command CMD1 and the second command CMD2. The processor 214 is coupled to the power supply control circuit 211 and the operation interface 213. The processor 214 receives one of the first command CMD1 and the second command CMD2 from the operation interface 213 and a power VB (that is, the residual power) from the battery BTR of the power supply control circuit 211.

In the embodiment, the display 215 is coupled to the processor 214. The display 215 displays the power VB of the battery BTR. In addition, the display 215 may also display a wireless power supply status, a wireless charging status, a mileage, a riding time, a rental fee and other information of the electric auxiliary vehicle EV1, but the disclosure is not limited thereto. The vehicle communication circuit 216 is coupled to the processor 214. During the period of wireless communication between the control device 210_1 and the wireless charging platform 220, the vehicle communication circuit 216 wirelessly provides one of the first command CMD1 and the second command CMD2, and the power VB of the battery BTR to the wireless charging platform 220.

The processor 214 may be, for example, a central processing unit (CPU) or another programmable general-purpose or special-purpose microprocessor, a digital signal processor (DSP), a programmable controller, an application specific integrated circuit (ASIC), a programmable logic device (PLD), or other similar devices or a combination of the devices. The processor may load and execute computer programs. The display 215 may be a liquid crystal display (LCD), a light-emitting diode (LED), an organic light-emitting diode (OLED), or other display devices that provides a display function. The display utilizes a cold cathode fluorescent lamp (CCFL) or the light-emitting diode (LED) as a screen of a backlight module.

The power supply control circuit 211 includes a charging and discharging circuit 2111, a wireless power transmission circuit 2112, a sensor circuit 2113, and a controller 2114. The charging and discharging circuit 2111 is coupled to the battery BTR and the motor MTR. The wireless power transmission circuit 2112 is coupled to the charging and discharging circuit 2111. The sensor circuit 2113 senses a status of the battery BTR. In the embodiment, the sensor circuit 2113 may sense the power VB of the battery BTR, a voltage value of the battery power PB, and an electric current value of the battery power PB through one of the charging and discharging circuit 2111 and the wireless power transmission circuit 2112. The sensor circuit 2113 may also sense a voltage value of the wireless power PC and an electric current value of the wireless power PC through one of the charging and discharging circuit 2111 and the wireless power transmission circuit 2112.

The controller 2114 is coupled to the charging and discharging circuit 2111 and the wireless power transmission circuit 2112. During riding, the controller 2114 controls the charging and discharging circuit 2111, so that the charging and discharging circuit 2111 uses the battery power PB of the battery BTR to drive the motor MTR. During riding, the controller 2114 also controls the charging and discharging circuit 2111, so that the charging and discharging circuit 2111 charges the battery BTR by using the pedaling force.

In the embodiment, during the period of wireless communication between the control device 210_1 and the wireless charging platform 220, the controller 2114 controls the charging and discharging circuit 2111 and the wireless power transmission circuit 2112 in response to one of the first command CMD 1 and the second command CMD2.

The controller 2114 controls the charging and discharging circuit 2111 and the wireless power transmission circuit 2112 in response to the first command CMD1, so that the power supply control circuit 211 charges the battery BTR by using the wireless power PC. Furthermore, the wireless power transmission circuit 2112 is, for example, a coil circuit. The charging and discharging circuit 2111 is, for example, a conversion circuit including multiple power switches. When the controller 2114 receives the first command CMD1, the controller 2114 controls the wireless power transmission circuit 2112 to receive the wireless power PC, and controls the charging and discharging circuit 2111 to convert the wireless power PC into a charging power PC'. The wireless power PC is an alternate current (AC) power. When the charging and discharging circuit 2111 receives the first command CMD1, the charging and discharging circuit 2111 rectifies the wireless power PC by operating multiple power switches to generate the charging power PC', and provides the charging power PC' to the battery BTR. For example, the controller 2114 controls the charging and discharging circuit 2111 in response to the first command CMD1 to be a full-bridge rectifier circuit.

The controller 2114 controls the charging and discharging circuit 2111 and the wireless power transmission circuit 2112 in response to the second command CMD2, so that the power supply control circuit 211 wirelessly transmits the battery power PB to the wireless charging platform 220. Furthermore, when the controller 2114 receives the second command CMD2, the controller 2114 controls the wireless power transmission circuit 2112 to receive the battery power PB, and controls the charging and discharging circuit 2111 to convert the battery power PB into the wireless power PB'. The wireless power PB' is the AC power. When the charging and discharging circuit 2111 receives the first command CMD1, the charging and discharging circuit 2111 rectifies the wireless power PC by operating multiple power switches to generate the wireless power PB', and provides the wireless power PB' to the wireless power transmission circuit 2112. For example, the controller 2114 controls the charging and discharging circuit 2111 in response to the first command CMD1 to be a power inverter. The wireless power transmission circuit 2112 wirelessly sends the wireless power PB' to the wireless charging platform 220.

In addition, the controller 2114 further determines the power VB of the battery BTR. When the power VB of the battery BTR is lower than a set value, the power VB is shown to be insufficient. Therefore, the controller 2114 controls the charging and discharging circuit 2111 to stop converting the battery power PB into the wireless power PB'.

In the embodiment, the wireless charging platform 220 includes a platform power supply control circuit 221, an identification code receiving circuit 222, a platform communication circuit 223, and a platform processor 224. The platform power supply control circuit 221 is coupled to the external power PE. During the period of wireless communication between the control device 210_1 and the wireless charging platform 220, the platform power supply control circuit 221 wirelessly powers the battery BTR by wirelessly using the external power PE in response to the first command CMD1. During the period of wireless communication between the control device 210_1 and the wireless charging platform 220, the platform power supply control circuit 221 wirelessly powers at least one of the other electric auxiliary vehicles (such as the electric auxiliary vehicle EV2) by using the wireless power PB' from the power supply control circuit 211 in response to the second command CMD2.

In the embodiment, the identification code receiving circuit 222 receives an identification code of the electric auxiliary vehicle EV1 and the electric auxiliary vehicle EV2. Taking the embodiment as an example, when the electric auxiliary vehicle EV1 enters a wireless charging field of the wireless charging platform 220, the identification code receiving circuit 222 may receive the identification code ID1 sent by the identification code sending circuit 212. Therefore, the wireless charging platform 220 may use the identification code ID1 to identify the electric auxiliary vehicle EV 1, and learn that the electric auxiliary vehicle EV 1 enters the wireless charging field. In the embodiment, the identification code sending circuit 212 may, for example, use a radio-frequency identification (RFID) technology to provide the identification code ID1 to the identification code receiving circuit 222, but the disclosure is not limited thereto.

In the embodiment, the platform communication circuit 223 wirelessly receives one of the first command CMD1 and the second command CMD2, and the power VB of the battery BTR. The platform communication circuit 223 wirelessly communicates with the vehicle communication circuit 216 to receive one of the first command CMD1 and the second command CMD2, and the power VB of the battery BTR. The platform communication circuit 223 may, for example, wirelessly communicate with the vehicle communication circuit 216 by using a ZigBee wireless network protocol, but the disclosure is not limited thereto.

The platform processor 224 is coupled to the platform power supply control circuit 221 and the platform communication circuit 223. The platform processor 224 controls the platform power supply control circuit 221 according to one of the first command CMD1 and the second command CMD2. The platform power supply control circuit 221 operates power supply in response to the control of the platform processor 224. In the embodiment, the platform power supply control circuit 221 includes a bi-directional power conversion circuit 2211, a wireless power transmission circuit 2212, a sensor circuit 2213, and a platform controller 2214. The bi-directional power conversion circuit 2211 is coupled to the external power PE. The wireless power transmission circuit 2212 is coupled to the bi-directional power conversion circuit 2211. The sensor circuit 2213 senses the platform power supply PP of the platform power supply control circuit 221. In the embodiment, the sensor circuit 2213 may sense the platform power supply PP through one of the bi-directional power conversion circuit 2211 and the wireless power transmission circuit 2212. In addition, the platform processor 224 further provides a usage bonus BNS corresponding to the electric auxiliary vehicle EV1 according to the wireless power PB'.

In the embodiment, the platform processor 224 may be, for example, a central processing unit (CPU) or another programmable general-purpose or special-purpose microprocessor, a digital signal processor (DSP), a programmable controller, an application specific integrated circuit (ASIC), a programmable logic device (PLD), or other similar devices or a combination of the devices. The platform processor 224 may be loaded and execute computer programs.

The platform controller 2214 is coupled to the platform processor 224, the bi-directional power conversion circuit 2211, and the wireless power transmission circuit 2212. The platform controller 2214 controls the bi-directional power conversion circuit 2211 to convert the external power PE into the charging power PC in response to the first command CMD1, and controls the wireless power transmission circuit 2212 to provide the charging power PC to the control device 210_1. The wireless power transmission circuit 2212 is, for example, a coil circuit.

The platform controller 2214 controls the wireless power transmission circuit 2212 to receive the wireless power PB' in response to the second command CMD2. In addition, the wireless power transmission circuit 2212 wirelessly powers at least one of the other electric auxiliary vehicles (such as the electric auxiliary vehicle EV2) by using the wireless power PB'.

In addition, the platform controller 2214 further determines the power VB of the battery BTR. When the power VB of the battery BTR is lower than a set value, the power VB is shown to be insufficient. Therefore, the platform controller 2214 controls the wireless power transmission circuit 2212 to stop receiving the wireless power PB'.

In the embodiment, the sensor circuit 2213 may provide the platform power supply PP to the platform processor 224. The platform communication circuit 223 may further wirelessly provide the platform power supply PP from the platform processor 224 to the remote monitoring device 230. The remote monitoring device 230 determines the platform power supply PP. When the platform power supply PP is greater than the platform power supply upper limit PLM, the remote monitoring device 230 notifies the wireless charging platform 220 by using the notification signal SN. For example, the remote monitoring device 230 transmits the notification signal SN to the platform communication circuit 223. The platform processor 224 receives the notification signal SN, and learns that the current platform power supply PP is too high according to the notification signal SN. Therefore, the platform processor 224 controls the platform power supply control circuit 221 to reduce load. Therefore, the platform power supply PP decreases.

In summary, the power management system of the disclosure may control the power supply behavior of the wireless charging platform according to the residual power and the platform power supply upper limit. In addition, the wireless charging platform may wirelessly power at least one of the other electric auxiliary vehicles by using the battery power of the first electric auxiliary vehicle. In this way, the power management system may provide a power-saving and highly efficient wireless power management mechanism. In addition, the wireless charging platform further provides the usage bonus corresponding to the electric auxiliary vehicle according to the battery power received by the wireless charging platform itself. The more battery power the electric auxiliary vehicle contributes, the more usage bonus the user of the electric auxiliary vehicle receives. In this way, the power management system provides a novel transaction method.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. A power management system (100, 200) for a wireless power supply, comprising:
a plurality of control devices (110_1, 110_2, 210_1, 210_2), respectively configured on one of a plurality of electric auxiliary vehicles (EV1, EV2);
a wireless charging platform (120, 220), configured to wirelessly communicate with the plurality of control devices (110_1, 110_2, 210_1, 210_2), and wirelessly charging at least one of the plurality of electric auxiliary vehicles (EV1, EV2); and
a remote monitoring device (130, 230), configured to communicate with the wireless charging platform (120, 220) to receive a residual power of the plurality of electric auxiliary vehicles (EV1, EV2), and to control a power supply behavior of the wireless charging platform (120, 220) according to the residual power and a platform power supply upper limit (PLM),
wherein a first control device (110_1, 210_1) among the plurality of control devices (110_1, 110_2, 210_1, 210_2) is configured on a first electric auxiliary vehicle (EV1) among the plurality of electric auxiliary vehicles (EV1, EV2),
wherein the wireless charging platform (120, 220) wirelessly powers the first electric auxiliary vehicle (EV1) in response to a first command (CMD1) from the first control device (110_1, 210_1), and
wherein the wireless charging platform (120, 220) wirelessly powers at least one of the other electric auxiliary vehicles (EV2) by using a battery power (PB) of the first electric auxiliary vehicle (EV1) in response to a second command (CMD2) from the first control device (110_1, 210_1).

2. The power management system (200) according to claim 1, wherein the first control device (210_1) comprises:
a power supply control circuit (211), coupled to a battery (BTR) and a motor (MTR) of the first electric auxiliary vehicle (EV1), and configured to:
during a riding period, drive the motor (MTR) by using the battery power (PB) of the battery (BTR) and charge the battery (BTR) by using a pedaling force, and
during a period of wireless communication between the first control device (210_1) and the wireless charging platform (220), charge the battery (BTR) by using a first wireless power (PC) from the wireless charging platform (220) in response to the first command (CMD1) and wirelessly transmit the battery power (PB) to the wireless charging platform (220) in response to the second command (CMD2).

3. The power management system (200) according to claim 2, wherein the first control device (210_1) further comprises:
an identification code sending circuit (212), configured to provide an identification code (ID1) of the first electric auxiliary vehicle (EV1) to the wireless charging platform (220) during the period of wireless communication between the first control device (210_1) and the wireless charging platform (220).

4. The power management system (200) according to claim 2, wherein the first control device (210_1) further comprises:
an operation interface (213), coupled to a power supply control circuit (211), and operated to provide one of the first command (CMD1) and the second command (CMD2).

5. The power management system (200) according to claim 4, wherein the first control device (210_1) further comprises:
a processor (214), coupled to the power supply control circuit (211) and the operation interface (213), and configured to receive one of the first command (CMD1) and the second command (CMD2) from the operation interface (213), and a power (VB) of the battery (BTR) from the power supply control circuit (211).

6. The power management system (200) according to claim 5, wherein the first control device (210_1) further comprises:
a display (215), coupled to the processor (214), and configured to display the power (VB) of the battery (BTR).

7. The power management system (200) according to claim 5, wherein the first control device (210_1) further comprises:
a vehicle communication circuit (216), coupled to the processor (214), configured to wirelessly provide one of the first command (CMD1) and the second command (CMD2), and the power (VB) of the battery (BTR) to the wireless charging platform (220) during the period of wireless communication between the first control device (210_1) and the wireless charging platform (220).

8. The power management system (200) according to claim 5, wherein the power supply control circuit (211) comprises:
a charging and discharging circuit (2111), coupled to the battery (BTR) and the motor (MTR);
a first wireless power transmission circuit (2112), coupled to the charging and discharging circuit (2111);
a first sensor circuit (2113), configured to sense a status of the battery (BTR); and
a first controller (2114), coupled to the processor (214), the charging and discharging circuit (2111), and the first wireless power transmission circuit (2112), and configured to:
during the riding period, control the charging and discharging circuit (2111) to allow the charging and discharging circuit (2111) to drive the motor (MTR) by using the battery power (PB) of the battery (BTR), and
during the riding period, control the charging and discharging circuit (2111) to allow the charging and discharging circuit (2111) to charge the battery (BTR) by using the pedaling force.

9. The power management system (200) according to claim 8, wherein during the period of wireless communication between the first control device (210_1) and the wireless charging platform (220):
the first controller (2114) controls the charging and discharging circuit (2111), and the first wireless power transmission circuit (2112) in response to the first command (CMD1) to allow the power supply control circuit (211) to charge the battery (BTR) by using the first wireless power (PC), and
the first controller (2114) controls the charging and discharging circuit (2111), and the first wireless power transmission circuit (2112) in response to the second command (CMD2) to allow the power supply control circuit (211) to wirelessly transmit the battery power (PB) to the wireless charging platform (220).

10. The power management system (200) according to claim 2, wherein the wireless charging platform (220) comprises:
a platform power supply control circuit (221), coupled to an external power (PE), and configured to wirelessly power the battery (BTR) by wirelessly using the external power (PE) in response to the first command (CMD1) during the period of wireless communication with the first control device (210_1), and wirelessly power at least one of the other electric auxiliary vehicles (EV2) by using a second wireless power (PB') from the first control device (210_1) in response to the second command (CMD2).

11. The power management system (200) according to claim 10, wherein the wireless charging platform (220) further comprises:
an identification code receiving circuit (222), configured to receive a plurality of identification codes of the plurality of electric auxiliary vehicles (EV1, EV2).

12. The power management system (200) according to claim 10, wherein the wireless charging platform (220) further comprises:
a platform communication circuit (223), configured to wirelessly receive one of the first command (CMD1) and the second command (CMD2), and a power (VB) of the battery (BTR); and
a platform processor (224), coupled to the platform power supply control circuit (221) and the platform communication circuit (223), and configured to control the platform power supply control circuit (221) according to one of the first command (CMD1) and the second command (CMD2).

13. The power management system (200) according to claim 12, wherein the platform power supply control circuit (221) comprises:
a bi-directional power conversion circuit (2211), coupled to an external power (PE);
a second wireless power transmission circuit (2212), coupled to the bi-directional power conversion circuit (2211);
a second sensor circuit (2213), configured to sense the platform power supply (PP) of the platform power supply control circuit (221); and
a platform controller (2214), coupled to the platform processor (224), the bi-directional power conversion circuit (2211), and the second wireless power transmission circuit (2212), and configured to:
convert the external power (PE) into a charging power (PC) by controlling the bi-directional power conversion circuit (2211) in response to the first command (CMD1), and provide the charging power (PC) to the first control device (210_1) by controlling the second wireless power transmission circuit (2212), and
receive the second wireless power (PB') of the first control device (210_1) by controlling the second wireless power transmission circuit (2212) in response to the second command (CMD2).

14. The power management system (200) according to claim 12, wherein:
the wireless charging platform (220) provides the platform power supply (PP) to the remote monitoring device (230) through the platform communication circuit (223), and
when the platform power supply (PP) is greater than the platform power supply upper limit (PLM), the remote monitoring device (230) notifies the wireless charging platform (220) to reduce load.

15. The power management system (100, 200) according to claim 1, wherein the wireless charging platform (120, 220) provides a usage bonus (BNS) corresponding to the first electric auxiliary vehicle (EV1) according to a wireless power (PB') from the first control device (210_1) received by the wireless charging platform (120, 220).
